# EUROPÄISCHE PATENTANMELDUNG

(11) **EP 3 714 972 A1**
(43) Veröffentlichungstag der Anmeldung: **30.09.2020**
(21) Anmeldenummer: 19165861.6
(22) Anmeldetag: 28.03.2019
(51) Int. Cl.: B01J 8/06, C07C 31/04

(54) **REAKTOR UND VERFAHREN ZUM BETREIBEN EINES REAKTORS**

(71) Anmelder: Siemens Aktiengesellschaft, 80333 München (DE)
(72) Erfinder: Meltzer, Katharina, 91052 Erlangen (DE); Tremel, Alexander, 91096 Möhrendorf (DE)

(57) **Zusammenfassung**

Die Erfindung betrifft einen Rohrbündelreaktor und ein Verfahren zum Betreiben eines Rohrbündelreaktors zum Umsetzen von Kohlenstoffdioxid zu Methanol. Der Rohrbündelreaktor weist wenigstens zwei Rohre und einen Gasverteiler zum Verteilen eines gasförmigen Edukts auf die Rohre auf. In die Rohre ist ein Katalysator eingebracht. Der Reaktor weist außerdem eine Verschlussvorrichtung zum Verschließen einzelner Rohre oder Rohrgruppen des Reaktors auf. Das gasförmige Edukt wird in die Rohre geführt und der Reaktor wird betrieben. Bei Abnahme der Eduktmenge werden einzelne Rohre oder Rohrgruppen verschlossen. Bei Zunahme der Eduktmenge werden einzelne Rohre oder Rohrgruppen wiederum geöffnet.

## Beschreibung

Die Erfindung betrifft einen Reaktor und ein Verfahren zum Betreiben eines Reaktors zum Umsetzen von Kohlenstoffdioxid und/oder Kohlenstoffmonoxid und Wasserstoff zu Methanol.

Fossile Energieträger verursachen Kohlendioxidemissionen, die nicht im Einklang mit den globalen Klimaschutzzielen stehen. Alternative, regenerative Energiequellen erzeugen Strom, der jedoch nicht zu jeder Zeit in gleicher Leistung zur Verfügung steht, also Schwankungen unterzogen ist. Derzeit wird nach Ansätzen gesucht, diesen verfügbaren elektrischen, regenerativ erzeugten Strom sinnvoll zu nutzen und beispielsweise chemische Wertprodukte herzustellen. Eine Möglichkeit besteht in der elektrochemischen Umwandlung von Wasser in Wasserstoff und Sauerstoff. Der erzeugte Wasserstoff kann dann mit Kohlenstoffdioxid oder Kohlenstoffmonoxid als Startmolekül reagieren, wodurch gleichzeitig die Kohlendioxidemissionen verringert werden. Das relativ einfach verfügbare Kohlenstoffdioxid, das ohnehin nicht in die Atmosphäre abgelassen werden soll, kann somit als kostengünstige Kohlenstoffquelle genutzt werden. Beispielsweise ist Methanol ein mögliches Produkt einer einstufigen Synthese aus Kohlendioxid und Wasserstoff nach folgender Gleichung:

CO₂ + 3H₂ -> CH₃OH + H₂O

Nachteilig an der Synthese von Methanol aus Kohlendioxid und Wasserstoff sind niedrige Gleichgewichtsumsätze, die bei 50 bar und 250 °C bei nur etwa 20 Prozent liegen. Daher muss ein großer Teil der gasförmigen Edukte im Kreis geführt werden. Durch die Druckverluste, die in einem Reaktor auftreten, muss das Gas dafür jeweils wieder komprimiert werden, was sehr energieintensiv ist und den Wirkungsgrad des Prozesses deutlich reduziert. Neben diesen energetischen Nachteilen ist ein derartiger im Kreis geführter Gasrecycleprozess kaum für einen dynamischen Betrieb der Anlage geeignet. Dies ist insbesondere bei fluktuierenden Stromquellen der regenerativen Energiequellen, insbesondere einer Wasserelektrolyse, ungünstig.

Heute werden Syntheseanlagen vor allem im kontinuierlichen Dauerbetrieb betrieben. Typischerweise werden Quentsch-Reaktoren, adiabate Reaktoren, gasgekühlte Reaktoren und isotherme Siedewasserreaktoren eingesetzt, um eineMethanolsynthese durchzuführen. All diesen Reaktormodellen ist gemein, dass sie für die Methanolsynthese im Dauerbetrieb mit 8500 Volllaststunden ausgelegt sind. Temperaturschwankungen und Druckschwankungen sind dabei möglichst vollständig zu vermeiden, um die Standzeit des Katalysators zu maximieren. Ein Katalysatorwechsel führt in großen Methanolanlagen nachteilig zu einem mehrwöchigen Betriebsausfall und damit zu erheblichen Kosten. Betreibt man die Methanolsynthese mit Kohlenstoffdioxid und Wasserstoff aus erneuerbaren Energien, ist davon auszugehen, dass sich die Volllaststunden deutlich verringern und die Anlage häufiger an- und abgefahren wird. Nachteilig wird dann der Katalysator belastet. Der Katalysator altert schneller, wodurch sich die Katalysatorstandzeit deutlich verringert.

Es ist daher Aufgabe der Erfindung einen Reaktor und ein Verfahren zum Betreiben eines Reaktors anzugeben, welche einen dynamischen Betrieb, insbesondere mit schnellen Lastwechseln und tiefer Teillast, großtechnisch ermöglichen.

Die Aufgabe wird erfindungsgemäß mit einem Reaktor gemäß Anspruch 1 und einem Verfahren gemäß Anspruch 12 gelöst.

Eine erfindungsgemäße Rohrreaktor zum Umsetzen von Kohlenstoffdioxid zu Methanol umfasst wenigstens zwei Rohre und einen Gasverteiler zum Verteilen eines gasförmigen Edukts auf die Rohre. In die Rohre ist ein Katalysator eingebracht. Einzelne Rohre oder Rohrgruppen weisen Verschlussvorrichtungen zum Verschließen auf.

Das erfindungsgemäße Verfahren zum Betreiben eines Rohrreaktors zum Umsetzen von Kohlenstoffdioxid zu Methanol umfasst mehrere Schritte. Zunächst erfolgt das Bereitstellen eines Reaktors mit wenigstens zwei Rohren und einem Gasverteiler zum Verteilen eines gasförmigen Edukts umfassend Wasserstoff und Kohlenstoffdioxid auf die Rohre. Einzelne Rohre oder Rohrgruppen weisen dabei eine Verschlussvorrichtung zum Verschließen auf. Das gasförmige Edukt wird in die Rohre geführt. Dabei wird der Reaktor betrieben, wobei bei Abnahme der Eduktmenge einzelne Rohre oder Rohrgruppen verschlossen werden oder bei Zunahme der Eduktmenge einzelne Rohre oder Rohrgruppen geöffnet werden.

Der Reaktor stellt also in anderen Worten einen Rohrbündelreaktor dar. Vorteilhaft können einzelne Rohre oder Rohrgruppen dieses Rohrbündelreaktors nach Bedarf verschlossen werden. Dies ist insbesondere dann der Fall, wenn wenig Edukt, insbesondere Wasserstoff, für eine Reaktion zur Verfügung steht. Steigt die Menge des verfügbaren Edukts wieder an, so können diese Rohre oder Rohrgruppen vorteilhaft wieder geöffnet werden. Es ist also vorteilhaft möglich, den Reaktor dynamisch zu betreiben, ohne ihn komplett herunterfahren zu müssen. Einzelne Rohre müssen nicht bei Teillast betrieben werden, was dem Katalysator schaden würde. Die Rohre werden entweder komplett verschlossen oder bleiben weiterhin für eine Reaktion geöffnet. In den geöffneten Rohren läuft die Reaktion weiter. Durch die exotherme Reaktion entsteht Wärme. Diese Wärme wird auf andere Rohre übertragen. Sie wird insbesondere auch auf Rohre übertragen, die verschlossen sind. So wird vorteilhaft sichergestellt, dass die Temperatur in den Rohren, insbesondere in den geschlossenen Rohren, nicht unter die Kondensationstemperatur der Reaktionsprodukte Wasser und Methanol sinkt.

Werden die einzelnen Reaktionsrohre wieder angefahren, so ist kurzzeitig bis zum Erreichen einer optimalen Reaktionstemperatur und des Reaktionsdrucks, mit einer verminderten Produktivität und Selektivität zu rechnen. Ein geringer Anteil an Nebenprodukten, insbesondere für den Einsatz von Methanol als Treibstoff, ist aber tolerierbar, da sich die Verbrennungseigenschaften des Methanols nicht signifikant verändern.

In einer vorteilhaften Ausgestaltung und Weiterbildung der Erfindung ist die Verschlussvorrichtung am Ende eines Rohres angeordnet. Besonders vorteilhaft ist die Verschlussvorrichtung derart angeordnet, dass die Strömungsrichtung der Edukte auf die Verschlussvorrichtung zu erfolgt. Vorteilhaft sind die abgeschalteten Rohre somit noch mit Eduktgas gefüllt. Die Reaktion läuft dann vorteilhaft in diesen Rohren so lange weiter, bis das chemische Gleichgewicht erreicht ist. Vorteilhaft wird dadurch auch erreicht, dass die Temperatur in den abgeschalteten Rohren langsam absinkt. Dies schont sowohl den Katalysator als auch die weiteren eingesetzten Materialien.

In einer weiteren vorteilhaften Ausgestaltung und Weiterbildung der Erfindung umfasst der Reaktor wenigstens vier Rohre, wobei wenigstens eine Gruppe von Rohren auf einem Kreisumfang angeordnet sind. Der Rohrbündelreaktor kann insbesondere auch 50 Rohre, besonders bevorzugt 1000 Rohre, oder sogar mehr als 10.000 Rohre umfassen. Liegen die Rohre in Gruppen kreisförmig umeinander, so ist vorteilhaft gewährleistet, dass Wärme zwischen den Rohren ausgetauscht werden kann. Für den Fall, dass einzelne Rohre oder Rohrgruppen verschlossen werden, kann somit vorteilhaft dafür gesorgt werden, dass umliegende geöffnete Rohre, in denen die exotherme Reaktion abläuft, auf einer Temperatur oberhalb der Kondensationstemperatur von Wasser und Methanol gehalten werden. Ein weiterer Vorteil ist, dass die Anzahl der Rohre, die auf einem Umfang liegen, von der Mitte nach außen zunimmt. Vorteilhaft können so je nach Abhängigkeit der Menge des zu Verfügung stehenden Wasserstoffs eine unterschiedliche Anzahl an Rohren geschlossen, in anderen Worten ausgeschaltet, werden.

In einer weiteren vorteilhaften Ausgestaltung und Weiterbildung der Erfindung ist zwischen den Rohren ein Fluid, insbesondere Wasser, angeordnet. In anderen Worten sind die Rohre von dem Fluid umgeben. Das Wasser kann die Temperatur in dem Rohrbündelreaktor vorteilhaft beeinflussen. Das Wasser kann auf der einen Seite die Wärme speichern, sodass die Temperatur in verschlossenen Rohren oberhalb der Kondensationstemperatur gehalten wird. Das Wasser kann auf der anderen Seite die Temperatur in dem Reaktor senken. Dies ist insbesondere dann, wenn alle Rohre geöffnet sind und eine Maximaltemperatur im Reaktor nicht überschritten werden sollte sinnvoll. Der Katalysator wird dann vorteilhaft geschützt. Typische Reaktionsbedingungen für die Methanolsynthese sind Temperaturen in einem Bereich zwischen 200 °C und 300 °C. Der Druck liegt dabei in einem Bereich von 50 bar bis 100 bar.

In einer weiteren vorteilhaften Ausgestaltung und Weiterbildung der Erfindung ist die Verschlussvorrichtung als wenigstens eine Lochscheibe ausgestaltet. Die Löcher sind dabei in Gruppen auf dem Kreisumfang der Rohre angeordnet. Die Durchmesser der Löcher entsprechen einem Rohrdurchmesser. Die Lochscheibe kann so über einer kreisförmig angeordnete Rohrgruppe angeordnet werden, dass die Rohre dieser Gruppe im Gesamten verschlossen oder im Gesamten geöffnet sind. Zwischen diesen beiden Positionen wird durch Drehen der Lochscheibe, insbesondere um die Mitte des Rohrbündelreaktors, hin und her geschalten. Es können mehrere Lochscheiben übereinander angeordnet sein. Alternativ kann um eine erste Lochscheibe wenigstens ein Ring mit Löchern angeordnet sein, der Rohre auf einem zweiten größeren Umfang aufweist. So können Rohrgruppen, die auf unterschiedlichen Umfängen angeordnet sind, unabhängig voneinander geöffnet oder verschlossen werden.

In einer weiteren vorteilhaften Ausgestaltung und Weiterbildung der Erfindung umfasst die Verschlussvorrichtung Verschlussscheiben zum Verschließen einzelner Rohre. Diese Verschlussscheiben weisen wenigstens den Rohrdurchmesser auf. Besonders bevorzugt sind diese Verschlussscheiben auf einem Ring befestigt. Dieser Ring hat denselben Durchmesser, wie einzelne Rohrgruppen des Rohrbündelreaktors. Auch hier können durch Drehen des Rings, insbesondere um die Mitte des Rohrreaktors, die Rohre einer Rohrgruppe auf demselben Umfang verschlossen oder geöffnet werden. Es können mehrere Ringe mit Verschlussscheiben übereinander oder ineinander angeordnet sein. Die unterschiedlichen Ringe haben dann unterschiedliche Durchmesser. Die Durchmesser entsprechen dem Umfang des Kreises, auf dem die Rohre des Reaktors angeordnet sind. Auf diese Weise können Rohrgruppen, die auf unterschiedlichen Umfängen angeordnet sind, unabhängig voneinander geöffnet oder verschlossen werden.

Sowohl die Lochscheiben als auch die Verschlussscheiben liegen zweckmäßigerweise direkt auf den Rohren auf, um diese komplett verschließen zu können. Wenn Lochscheiben übereinander angeordnet sind, könnte eine Höhendifferenz zwischen den Scheiben durch Dichtungen oder durch unterschiedliche Rohrlängen ausgeglichen werden, so dass die Lochscheiben einzelne Rohre verschließen können. Alternativ oder zusätzlich ist es möglich, zwischen den Rohren und der Lochscheibe und/oder der Verschlussscheibe Dichtungen anzuordnen. Die Dichtungen umfassen als Materialien insbesondere Graphit, besonders bevorzugt als Carbonfasermaterialien und Metall.

Besonders bevorzugt ist es, Rohrgruppen die auf Umfängen liegen, die direkt nebeneinander angeordnet sind, nicht zeitgleich zu verschließen. Bevorzugt grenzt also immer eine Rohrgruppe die verschlossen ist, an eine Rohrgruppe, die geöffnet ist. Dies gewährleistet, dass die Temperatur in den Rohren, die verschlossen sind und die aufgrund der fehlenden Wärme aus der exothermen Reaktion abkühlen, ausreichend hoch bleibt, sodass die Kondensationstemperatur nicht unterschritten wird. Demzufolge ist es auch nicht nötig, alle Rohre verschließbar auszugestalten. Eine Rohrgruppe kann immer geöffnet bleiben. Reicht die Last im Reaktor selbst für diese Minimallast in den immer geöffneten Rohren nicht mehr aus, so sollte der Reaktor heruntergefahren werden.

In einer weiteren vorteilhaften Ausgestaltung und Weiterbildung der Erfindung weist die Verschlussvorrichtung eine Magnetkupplung zum kontaktlosen Bewegen der Verschlussscheiben oder Lochscheiben auf. Mittels der Magnetkupplung können die Verschlussscheiben oder die Lochscheiben von außen gedreht werden. Vorteilhaft wird die Anzahl der Medien berührenden Dichtungen dadurch so gering wie möglich gehalten.

In einer weiteren vorteilhaften Ausgestaltung und Weiterbildung der Erfindung umfasst die Verschlussvorrichtung Ventile zum Verschließen einzelner Rohre. Die Ventile sollten den Temperaturen und Drücken der Reaktion, insbesondere Drücken von einem Bereich von 50 bar bis 100 bar und Temperatur in einem Bereich von 200 °C bis 300 °C, standhalten.

In einer weiteren vorteilhaften Ausgestaltung und Weiterbildung der Erfindung umfasst die Verschlussvorrichtung Deckel, wobei die Deckel unterschiedliche Gewichte aufweisen. In dieser Ausführungsform wird das Verschließen und Öffnen der Rohre durch die Strömung in den Rohren bestimmt. Sinkt die Strömung in den Rohren, da weniger Edukt, insbesondere Wasserstoff, zur Verfügung steht, so sinkt auch der Strömungsdruck. In Abhängigkeit der Gewichte auf den Deckeln reicht der Strömungsdruck nicht mehr aus, um die Deckel anzuheben und das Rohr offenzuhalten. Vorteilhaft können Rohre in dieser Ausführungsform einzeln geöffnet oder verschlossen werden, unabhängig von ihrer Position im Reaktor, also auch unabhängig von einer Anordnung auf einem Kreisumfang. Es werden lediglich unterschiedlich schwere Deckel montiert. Besonders bevorzugt umfassen die Deckel eine Verschlussscheibe, auf die unterschiedliche Gewichte angebracht sind. Besonders bevorzugt befinden sich die Deckel am Ende des Rohres in Strömungsrichtung. Dann befindet sich bei Verschließen der Rohre noch Edukt in den Rohren, sodass die Reaktion hier bis zum thermischen Gleichgewicht ablaufen kann, wodurch ein Temperaturabfall in den Rohren möglichst gering gehalten werden kann. Es ist aber ebenso denkbar, dass sie zu Beginn des Rohres angeordnet sind.

In einer weiteren vorteilhaften Ausgestaltung und Weiterbildung der Erfindung umfasst die Verschlussvorrichtung Federn, wobei die Federn unterschiedliche Federstärken aufweisen. Sie weisen außerdem Verschlussscheiben auf, die wenigstens den Durchmesser der Rohre haben, um diese zu verschließen. Die Federn sind in Strömungsrichtung am Ende des Rohres angeordnet. In anderen Worten strömt das Eduktgas auf die Federn zu. Auch in dieser Ausführungsform wird in Abhängigkeit der Strömung das Öffnen einzelner Rohre oder Rohrgruppen ermöglicht. Nimmt die Eduktmenge, insbesondere die Menge des Wasserstoffs, ab, so reicht der Strömungsdruck teilweise nicht mehr aus, um die Federn zusammenzudrücken und den Weg aus dem Rohr freizumachen. Das Rohr bleibt dann verschlossen. Vorteilhaft können auch hier einzelne Rohre oder Rohrgruppen über den gesamten Reaktor verschlossen werden, unabhängig davon ob sie auf Kreisumfängen angeordnet sind oder nicht.

In einer weiteren vorteilhaften Ausgestaltung und Weiterbildung der Erfindung wird der Wasserstoff mittels Wasserelektrolyse aus Windenergie Sonnenenergie und/oder Wasserenergie hergestellt. Es ist also mittels dieser Erfindung vorteilhaft möglich in Zeiten mit viel Sonne und viel Strom die Energie als Wertstoff, in diesem Fall Methanol, zu speichern. Da diese erneuerbaren Energien nicht konstant anfallen, sondern in Abhängigkeit des Wetters dynamisch, ist es vorteilhaft möglich, mit dem erfindungsgemäßen Reaktor und dem Verfahren die Methanolsynthese dynamisch zu gestalten.

In einer weiteren vorteilhaften Ausgestaltung und Weiterbildung der Erfindung erfolgt das Verschließen und das Öffnen in Abhängigkeit der Verfügbarkeit von Wasserstoff. Insbesondere der Wasserstoff wird aus erneuerbaren Energien gewonnen, die nicht konstant zur Verfügung stehen. Somit bestimmt die Verfügbarkeit des Wasserstoffs aus erneuerbaren Energien darüber, ob der Reaktor in Volllast oder Teillast gefahren werden muss.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: einen Reaktor mit drei Rohren und einer Lochscheibe zum Verschließen einzelner Rohre;
- Figur 2: eine Lochscheibe zum Verschließen der Rohre des Reaktors;
- Figur 3: mehrere Verschlussscheiben zum Verschließen der Rohre des Reaktors in einer ersten Position, in der alle Rohre geöffnet sind;
- Figur 4: mehrere Verschlussscheiben zum Verschließen der Rohre des Reaktors in einer zweiten Position, in der eine erste Gruppe von Rohren verschlossen ist;
- Figur 5: mehrere Verschlussscheiben zum Verschließen der Rohre des Reaktors in einer dritten Position, in der eine zweite Gruppe von Rohren verschlossen ist;
- Figur 6: einen Reaktor mit drei Rohren, von denen zwei Rohre mit Deckeln verschließbar sind;
- Figur 7: einen Reaktor mit drei Rohren, von denen zwei mit Federn verschließbar sind.

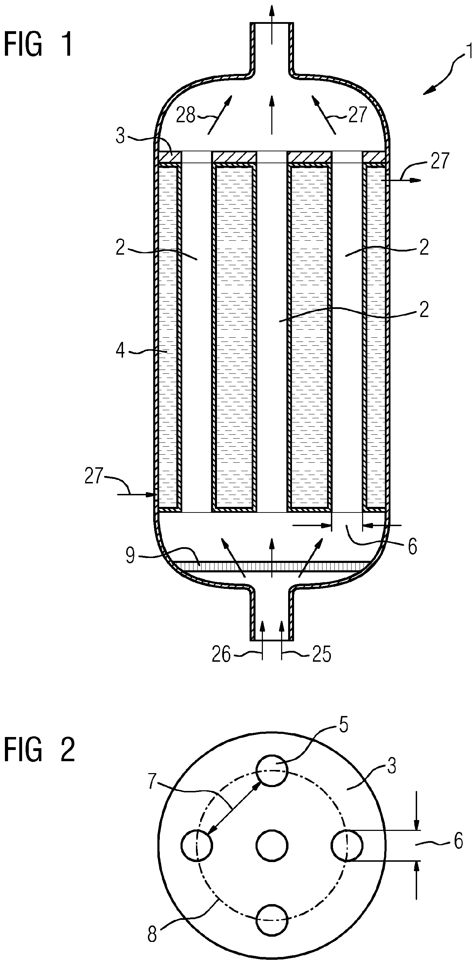

Figur 1 zeigt einen Reaktor 1 mit drei Rohren 2 in einer seitlichen Ansicht. Die Edukte Wasserstoff 25 und Kohlenstoffdioxid 26 strömen durch den Einlass des Reaktors 1 hinein und werden in dem Gasverteiler 9 gleichmäßig über den Querschnitt des Reaktors 1 verteilt. In Strömungsrichtung der Edukte gesehen befindet sich am Ende der Rohre 2 eine Lochscheibe 3. In diesem Ausführungsbeispiel ist die Position der Lochscheibe 3 derart eingestellt, dass die Rohre 2 geöffnet bleiben, und somit Produkte und nicht umgesetzt Edukte den Reaktor 1 verlassen können. Ein Kühlmedium, in diesem Beispiel Wasser 27, wird zwischen den Rohren in einem Kühlmediumaufnahmeraum 4 hindurchgeführt und anschließend wieder hinausgeführt.

Figur 2 zeigt eine Draufsicht der Lochscheibe 3. Zu sehen ist hier, dass die Löcher 5 der Lochscheibe auf einem Kreisumfang angeordnet sind. Dieser Kreisumfang entspricht dem Kreisumfang der Anordnung der Rohre in dem Rohrbündelreaktor 1. Der Durchmesser der Löcher 5 entspricht wenigstens dem Durchmesser der Rohre 2. Der Lochabstand 7 der Löcher 5 entspricht ebenfalls wenigstens dem Durchmesser der Rohre 2. Dadurch ist es möglich durch Drehen der Lochscheibe 3 und dem daraus folgenden Wechsel der Position der Lochscheibe, Rohre 2 zu verschließen. In diesem Beispiel würden durch den Wechsel der Position der Lochscheibe die Rohre des ersten Kreisumfangs 8 verschlossen werden. Lediglich das innere Rohr des Reaktors 1 würde geöffnet bleiben.

Vorteilhaft kann der Reaktor 1 somit in Teillast betrieben werden. Während des Betriebs des Reaktors 1 in Teillast werden die Rohre, die auf dem ersten Kreisumfang 8 liegen, durch die Abwärme des in der Mitte liegenden geöffneten Rohres, in welchem die exotherme Reaktion abläuft, geheizt. Vorteilhaft sinkt die Temperatur der äußeren Rohre somit nicht unter die Kondensationstemperatur von Wasser und Methanol.

In industriellen Maßstäben ist die Anzahl der Rohre um ein Vielfaches höher als hier gezeigt. Die Anzahl der Rohre kann hier wenigstens 10.000 Rohre in einem Rohrbündelreaktor betragen.

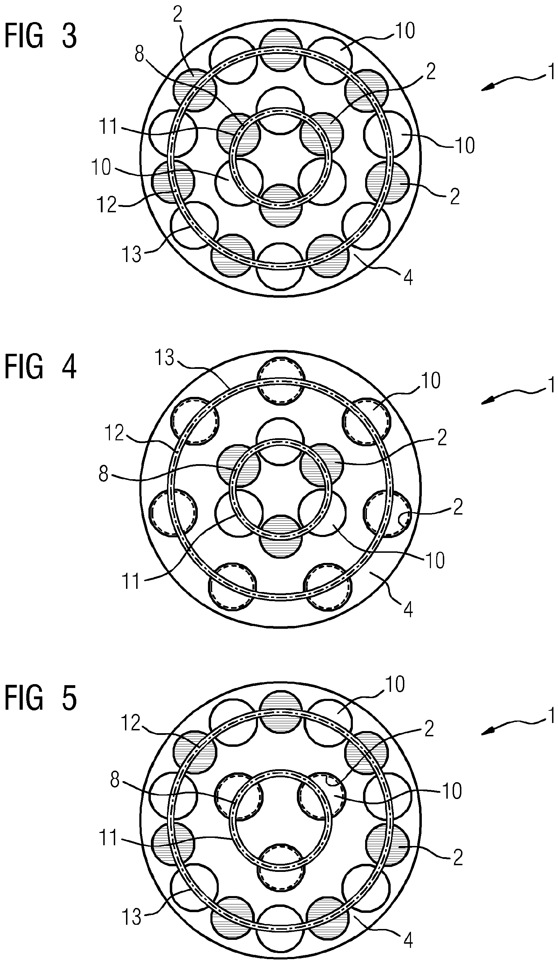

In einem weiteren Beispiel, dargestellt in Figur 3 ist ein Reaktor 1 mit zehn Rohren 2 dargestellt. Drei der Rohre 2 liegen auf einem inneren ersten Kreisumfang 8. Weitere sieben Rohre liegen auf einem zweiten äußeren Kreisumfang 12. Die Verschlussvorrichtung umfasst Verschlussscheiben 10. Die Durchmesser der Verschlussscheiben 10 weisen wenigstens den Durchmesser der Rohre 2 auf. Die Verschlussscheiben 10, die auf dem ersten Kreisumfang 8 liegen, sind über einen ersten Ring 11 miteinander verbunden. Die Verschlussscheiben 10, die auf dem zweiten Kreisumfang 12 liegen sind über einen zweiten Ring 13 miteinander verbunden.

Figur 3 zeigt beide Ringe in der Position, in der die Rohre 2 des Reaktors 1 geöffnet sind. Wird nun der äußere zweite Ring 13 gedreht, verändern sich die Positionen der Verschlussscheiben 10 derart, dass sie die Rohre 2 des Reaktors 1 verschließen. Diese Position ist in Figur 4 dargestellt. In dieser Position bleiben die Rohre 2 auf dem inneren ersten Kreisumfang 8 geöffnet. Somit wird der Reaktor 1 in Teillast gefahren. Dies ist insbesondere der Fall, wenn wenig Wasserstoff zur Verfügung steht. Dies wiederum passiert dann, wenn wenig Energie aus erneuerbaren Energien zur Verfügung steht und eine Wasserelektrolyse daher nur eine geringe Menge an Wasser zu Wasserstoff und Sauerstoff zerlegen kann.

Besonders bevorzugt umfasst die Verschlussvorrichtung eine Magnetkupplung, die es ermöglicht, die Verschlussscheiben 10 von außen zu drehen. So kann vorteilhaft die Anzahl der Medien berührenden Dichtungen geringgehalten werden.

Ausgehend wiederum von der Figur 3, die zeigt wie beide Ringe in der Position stehen, in der die Löcher 2 des Reaktors geöffnet sind, wird nun der innere erste Ring 11 gedreht. In der Folge dieser Drehung wird eine Position erreicht, die in Figur 5 dargestellt ist. In diesem Beispiel sind die Rohre 2 des Reaktors 1 auf dem zweiten äußeren Umfang 12 geöffnet. Die Rohre 2 des Reaktors 1 auf dem inneren ersten Kreisumfang 8 sind verschlossen. Auch hier wird der Reaktor 1 in Teillast betrieben. Vergleicht man nun die Positionen der Figur 4 und 5, so wird klar, dass es variabel möglich ist unterschiedlich hohe Teillasten mit diesem Reaktor 1 zu betreiben, ohne den gesamten Reaktor anpassen zu müssen.

All diesen Ausführungsbeispielen ist gemein, dass der Verschluss in Strömungsrichtung der Edukte am Ende der Rohre 2 des Reaktors erfolgt. Somit verbleibt eine Eduktmenge in den geschlossenen Rohren 2 und reagiert bis zum thermodynamischen Gleichgewicht. Sowohl diese Restwärme als auch die Wärme, die die Rohre 2 abgeben, die noch geöffnet sind und somit einen höheren Reaktionsumsatz aufweisen, halten die Temperaturen der Rohre 2 oberhalb der Kondensationstemperatur von Wasser und Methanol. Dadurch werden Strömungsinhomogenitäten und lokale Hotspots vermieden. Dadurch wird vorteilhaft erreicht, dass der Katalysator einen längeren Lebenszyklus aufweist und somit seltener ausgetauscht werden muss. Für den Fall, dass der Katalysator, der sich in den Rohren 2 befindet, ausgetauscht werden muss ist es vorteilhaft in allen Ausführungsbeispielen auch möglich, einzelne Rohre 2 stillzulegen und hier einen Katalysatoraustausch vorzunehmen. Einzelne andere Rohre 2 können geöffnet bleiben. Somit ist es möglich den Reaktor 1 in Teillast weiter zu betreiben, wenn eine Wartung, insbesondere durch Austausch des Katalysators, nötig ist.

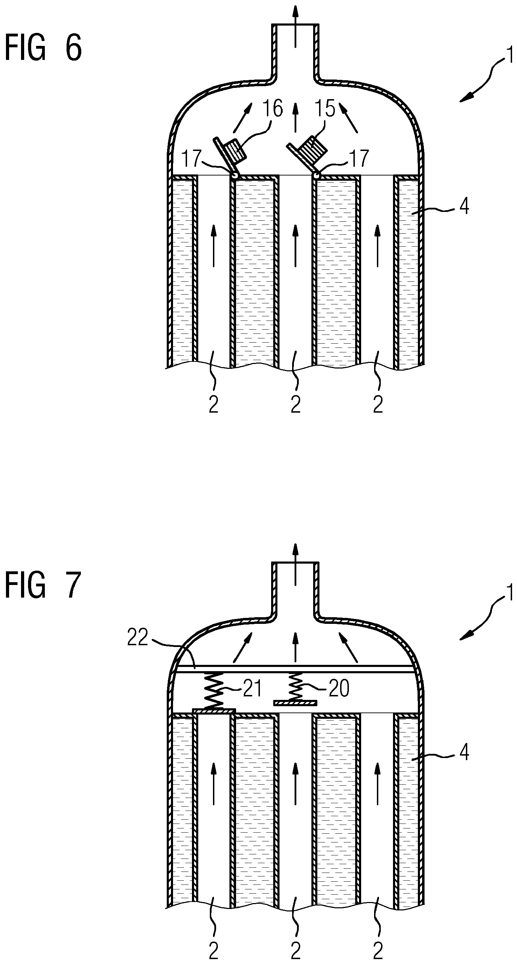

Figur 6 zeigt eine weitere Ausgestaltungsmöglichkeit der Verschlussvorrichtung des Reaktors 1. In diesem Ausführungsbeispiel werden die Rohre 2 des Reaktors 1 mithilfe von Deckeln 15, 16 verschlossen. Es ist ein erster Deckel 15 und ein zweiter Deckel 16 zum Verschließen der Rohre 2 vorgesehen. Der erste Deckel 15 weist dabei ein höheres Gewicht auf als der zweite Deckel 16. Die Strömungsrichtung der Edukte erfolgt auf die Deckel zu. Sinkt nun die Gasmenge der Edukte, sinkt auch der Strömungsdruck in den Rohren 2. Der schwere erste Deckel 15 bewegt sich dann nach unten und verschließt ein Rohr 2. Nach einer weiteren Reduktion der Gasmenge verschließt auch der leichtere zweite Deckel 16 auf ein weiteres Rohr. In diesem Beispiel wird die Strömung in einem dritten Rohr weiter aufrechterhalten, da dieses Rohr keinen Deckel aufweist. Die Gewichte auf den Deckeln sind derart angebracht, dass für das Öffnen der Deckel ein gewisser minimaler Strömungsdruck nötig ist. Durch das Öffnen der Deckel drehen sich die Gewichte über den Rand eines Rohres 2 und die Lagerung der Deckel, die punktförmig ausgestaltet ist, nimmt Gewicht auf. Dadurch ist der Strömungswiderstand in den Rohren 2 im geöffneten Zustand der Deckel geringer.

Figur 7 zeigt ein weiteres Ausführungsbeispiel der Verschlussvorrichtungen des Reaktors 1.Diese Verschlussvorrichtung umfasst Federn, die an einem Befestigungsring 22 im Reaktor 1 befestigt sind. Auch hier erfolgt die Strömungsrichtung der Edukte auf die Federn zu. Eine erste Feder 20 weist eine geringere Federhärte auf als eine zweite Feder 21. In diesem Ausführungsbeispiel ist der Strömungsdruck der Edukte in einem ersten Rohr nicht mehr so hoch, dass dieser die zweite Feder 21 herausdrücken könnte. Daher ist dieses Rohr 2 verschlossen. Der Strömungsdruck reicht jedoch aus, um die erste Feder 20 von der Öffnung des Rohrs 2 fernzuhalten und somit dieses Rohr geöffnet zu halten. In Abhängigkeit der Menge des Edukts ist es somit möglich den Reaktor 1 in Teillast zu betreiben.

### Bezugszeichenliste

- 1: Reaktor
- 2: Rohr
- 3: Lochscheibe
- 4: Kühlmediumaufnahmeraum
- 5: Loch
- 6: Rohrdurchmesser
- 7: Lochabstand
- 8: erster Kreisumfang
- 9: Gasverteiler
- 10: Verschlussscheibe
- 11: erster Ring
- 12: zweiter Kreisumfang
- 13: zweiter Ring
- 15: erster Deckel
- 16: zweiter Deckel
- 17: Lagerung
- 20: erste Feder
- 21: zweite Feder
- 22: Befestigungsring
- 25: Wasserstoff
- 26: Kohlenstoffdioxid
- 27: Wasser
- 28: Methanol

## Patentansprüche

1. Rohrbündelreaktor (1) zum Umsetzen von Kohlenstoffdioxid (26) zu Methanol (28) mit wenigstens zwei Rohren (2) und einem Gasverteiler (9) zum Verteilen eines gasförmigen Edukts auf die Rohre (2), wobei in den Rohren (2) ein Katalysator eingebracht ist, und mit wenigstens einer Verschlussvorrichtung (3, 10, 15, 20) zum Verschließen einzelne Rohre (2) oder Rohrgruppen des Reaktors (1).

2. Rohrbündelreaktor (1) nach Anspruch 1, wobei die Verschlussvorrichtung (3, 10, 15, 20) am Ende eines Rohres (2) angeordnet ist.

3. Rohrbündelreaktor (1) nach einem der Ansprüche 1 oder 2 mit wenigstens vier Rohren (2), wobei wenigstens eine Gruppe von Rohren (2) auf einem Kreisumfang (8, 12) angeordnet sind.

4. Rohrbündelreaktor (1) nach Anspruch 3, wobei die Verschlussvorrichtung als wenigstens eine Lochscheibe (3) ausgestaltet ist, wobei die Löcher (5) jeweils in Gruppen auf dem Kreisumfang (8, 12) der Rohre (2) angeordnet sind und ein Durchmesser der Löcher (5) einem Rohrdurchmesser entspricht.

5. Rohrbündelreaktor (1) nach einem der Ansprüche 1 bis 3, wobei die Verschlussvorrichtung Verschlussscheiben (10) zum Verschließen einzelner Rohre (2) aufweist.

6. Rohrbündelreaktor (1) nach Anspruch 5, wobei die Verschlussscheiben (10) auf einem Ring (11, 13) befestigt sind.

7. Rohrbündelreaktor (1) nach einem der Ansprüche 4 oder 6, wobei wenigstens zwei Lochscheiben (3) oder Ringe mit Verschlussscheiben (10) übereinander angeordnet sind.

8. Rohrbündelreaktor (1) nach einem der Ansprüche 4 bis 7, wobei die Verschlussrichtung eine Magnetkupplung zum kontaktlosen Bewegen der Verschlussscheiben (10) oder Lochscheiben (3) aufweist.

9. Rohrbündelreaktor (1) nach einem der Ansprüche 1 oder 2, wobei die Verschlussvorrichtung Ventile zum Verschließen einzelner Rohre (2) umfasst.

10. Rohrbündelreaktor (1) nach einem der Ansprüche 1 oder 2, wobei die Verschlussvorrichtung Deckel (15, 16) umfasst, wobei die Deckel unterschiedliche Gewichte aufweisen. (In Beschreibung auf Strömungsrichtung eingehen)

11. Rohrbündelreaktor (1) nach einem der Ansprüche 1 oder 2, wobei die Verschlussvorrichtung Federn (20, 21) umfasst, wobei die Federn (20, 21) jeweils eine Verschlussscheibe (10) und unterschiedliche Federstärken aufweisen.

12. Verfahren zum Betreiben eines Rohrbündelreaktor (1) zum Umsetzen von Kohlenstoffdioxid (26) zu Methanol (28) mit folgenden Schritten:
- Bereitstellen eines Rohrbündelreaktor (1) mit wenigstens zwei Rohren (2) und einem Gasverteiler (9) zum Verteilen eines gasförmigen Edukts umfassend Wasserstoff (25) und Kohlenstoffdioxid (26) und oder Kohlenstoffmonoxid auf die Rohre (2), und mit wenigstens einer Verschlussvorrichtung zum Verschließen einzelner Rohre (2) oder Rohrgruppen,
- Führen des gasförmigen Edukts in die Rohre (2),
- Betreiben des Reaktors (1), wobei
- bei Abnahme der Eduktmenge einzelne Rohre (2) oder Rohrgruppen verschlossen werden, oder
- bei Zunahme der Eduktmenge einzelne Rohre (2) oder Rohrgruppen wiederum geöffnet werden.

13. Verfahren nach Anspruch 12, wobei der Wasserstoff (25) mittels Wasser-Elektrolyse aus Windenergie, Sonnenergie und/ oder Wasserenergie hergestellt wird.

14. Verfahren nach Anspruch 12 oder 13, wobei das Verschließen und das Öffnen der Rohre (2) in Abhängigkeit der Verfügbarkeit von Wasserstoff erfolgt.

15. Verfahren nach einem der Ansprüche 12 bis 14, wobei die Strömungsrichtung der Edukte auf die Verschlussvorrichtung (3, 10, 15, 20) zu erfolgt.
